# EUROPEAN PATENT SPECIFICATION

(11) **EP 3 722 852 B1**
(45) Date of publication and mention of the grant of the patent: **04.09.2024**
(21) Application number: 20164961.3
(22) Date of filing: 23.03.2020
(51) Int. Cl.: G02B 6/44, H02G 3/08, H02G 3/12, H02G 3/14, H02G 3/18, H02G 3/22

(54) **A SUPPORT DEVICE FOR ATTACHING AN OPTICAL TERMINATION BOX TO A WALL MOUNTING ELEMENT**
HALTEVORRICHTUNG ZUR BEFESTIGUNG EINER OPTISCHEN ABSCHLUSSDOSE AN EINEM WANDBEFESTIGUNGSELEMENT
DISPOSITIF DE SUPPORT POUR FIXER UNE BOÎTE DE TERMINAISON OPTIQUE À UN ÉLÉMENT DE MONTAGE MURAL

(30) Priority: 10.04.2019 IT 201900005560
(43) Date of publication of application: 14.10.2020
(73) Proprietor: Prysmian S.p.A., 20126 Milan (IT)
(72) Inventor: ABBIATI, Fabio, 20126 Milano (IT)
(74) Representative: Perani & Partners S.p.A.

(56) References cited:
- EP-A1- 2 517 061
- WO-A1-2008/088035
- US-A1- 2016 109 676

## Description

### Field of the invention

The present invention relates to the field of equipment and components for the connection of optical termination box, e.g a costumer termination boxes, to a wall mounting element e.g. Wall Embedded Standardized Boxes (WESB) or DIN rails.

### Background of the invention

A FTTH ("Fiber To The Home") network is an optical access network providing a number of end customers with broadband communication services from operators, i.e. with services requiring data transmission at a very high rate, for example of some Mbit/s.

Typically, a FTTH network comprises a termination box or cabinet which cooperates with an access network and which is typically located in the basement of the building where the end users reside. An optical trunk cable, hereinafter referred to as "riser cable", exits the termination box and runs through the building from the basement up to all the building floors.

At each floor of the building, the riser cable may be optically connected to one or more optical cables, hereinafter referred to as "drop cables". Each drop cable typically terminates at its far end into a respective customer optical termination box located within or in proximity of the apartment or office of an end user.

There is a demand from end users for thinner optical termination boxes having reduced thickness, comparable with the thickness of power sockets. Typically, even if a reduced thickness of the optical termination box is provided, the connection element to the wall mounting element affects increases the thickness of the optical termination box projecting from the wall. Furthermore, after attaching the connection element to the wall mounting element, installation operations of the optical termination box are difficult since screws or other attaching members are needed.

DE 10351987 disclose a switchgear having a projecting part on a fixing plate of an embedded part carried out by an intermediary of a mounting clamp with elastic deformation, of the projecting part. The projecting part penetrates into a corresponding opening of the plate. The clamp equipped with a blocking unit in assembled position forms a theft-prevention device.

US 8403289 discloses a universal bracket provided for mounting electrical boxes. The bracket includes a generally rectangular first plate having at least one aperture defined within the first plate. The aperture is shaped to provide access to an electrical box mounted to the first plate, and further includes first and second pairs of diagonally opposite corners. A second plate extends rearward and substantially perpendicular to the first plate and located proximate a first side of the aperture. The first plate further includes one or more fastening portions and a plurality of mounting holes disposed about the fastening portions. One or more of the mounting holes are positioned for mounting the bracket to a vertical structural member adjacent either of two opposite sides of the bracket or a horizontal element adjacent a third side of the bracket, maintaining a particular bracket orientation.

EP 2523283 discloses a support for an electrical box having a returning unit e.g. spring-blade, for returning a claw into a retracted position. The frame of the support comprises a return unit, which has an opening through which a screw is engaged. The returning unit comprises a mounting portion, which is movably mounted relative to the frame between a nut and the returning unit. The returning unit comprises an actuating portion e.g. branch, which cooperates with the claw to bring the claw into the retracted position during unscrewing of the screw.

Further support devices for attaching an optical termination box to a wall mounting element are disclosed in EP2517061A1, US 2016/109676, and WO 2008/088035.

The above mentioned support devices increase the overall thickness of an optical termination box connected thereto.

### Summary of the invention

The Applicant has tackled the problem of providing a support device capable of attaching an optical termination box to different types of wall mounting elements, while keeping the thickness of the optical termination box projecting from the wall mounting element as small as possible.

The Applicant has found that a removable attachment between the optical termination box and the wall mounting element is achieved by providing a support device with a resilient deformable frame.

Therefore, the present invention relates to a support device for attaching an optical termination box to a wall mounting element according to claim 1.

The second attachment members are configured to mutually move upon resilient deformation of the resiliently deformable portion. In detail, the first and second attachment members moves in antagonist way upon application of forces on the walls. Preferably, the frame has a lower portion configured to be arranged adjacent to the wall mounting element, when the frame is attached to the wall mounting element, the frame has an upper portion configured to be arranged adjacent to the optical termination box, when the frame is attached to the optical termination box.

Preferably, the first attachment members are formed on the upper portion of the frame, the second attachment members are formed on the lower portion of the frame.

The at least one wall is resiliently deformable.

Preferably, the frame has a plurality of resiliently deformable walls defining the opening.

Preferably, the first attachment members comprise first protrusions formed on opposite first portions of the frame, the first portions being spaced apart along a first direction passing through the frame, the second attachment members comprise second protrusions formed on opposite second portions of the frame, the second portions being spaced apart along a second direction passing through the frame and transversal to the first direction.

Preferably, the frame is configured to reversibly switch between an undeformed configuration and a deformed configuration, the frame is configured to switch from the undeformed configuration to the deformed configuration upon application of forces on the walls of the frame, the frame is configured to switch back from the deformed configuration to the undeformed configuration upon release of the forces.

Preferably, the first attachment members are configured to engage a portion of the optical termination box when the frame is in undeformed configuration, engage a remaining portion of the optical termination box when the frame switches from the undeformed configuration to the deformed configuration, and attach the frame to the optical termination box when the first attachment members engage respective portions of the optical termination box and the frame switches back from the deformed configuration to the undeformed configuration.

Preferably, the second attachment members are configured to engage attaching portions of the wall mounting element when the frame switches from the undeformed configuration to the deformed configuration, and to attach the frame to the wall mounting element when the frame switches back from the deformed configuration to the undeformed configuration.

Preferably, the second attachment members are configured to engage a portion of the wall mounting element when the frame is in undeformed configuration, engage a remaining portion of the wall mounting element when the frame switches from the undeformed configuration to the deformed configuration, and attach the frame to the wall mounting element when the second attachment members engage respective portions of the wall mounting element and the frame switches back from the deformed configuration to the undeformed configuration.

According to a further aspect, the present invention relates to an optical termination assembly comprising an optical termination box, a wall mounting element, and a support device according to anyone of claims 1-10 attached to the optical termination box and the wall mounting element.

Preferably, the wall mounting element comprises a wallbox embedded in a wall, the wallbox having mounting members, the support device comprises third attachment members formed on the frame to attach the frame to the wallbox through fastening members attaching the third attachment members to the mounting members of the wallbox.

Preferably, the wall mounting element comprises a rail extending along a longitudinal axis, the rail having attaching portions coupled with the second attachment members for removably attaching the frame to the rail.

### Brief description of the drawings

The present invention will now be described in more detail hereinafter with reference to the accompanying drawings, in which some embodiments of the invention are shown.
FIG. 1 is an exploded view of optical termination assembly according to one embodiment of the present invention;
FIG. 2 is a front view of a support device mounted on a wall mounting element according to one embodiment of the present invention;
FIG. 3 is a perspective view of the support device of FIG. 1 and FIG. 2;
FIG. 4 is a top view of the support device of FIG. 1 and FIG. 2;
FIG. 5 is a top view of the support device of FIG. 3 with compression forces applied on to opposite walls of the frame;
FIG. 6 is a top view of the support device of FIG. 3 with compression forces applied on to opposite walls of the frame.

### Detailed description

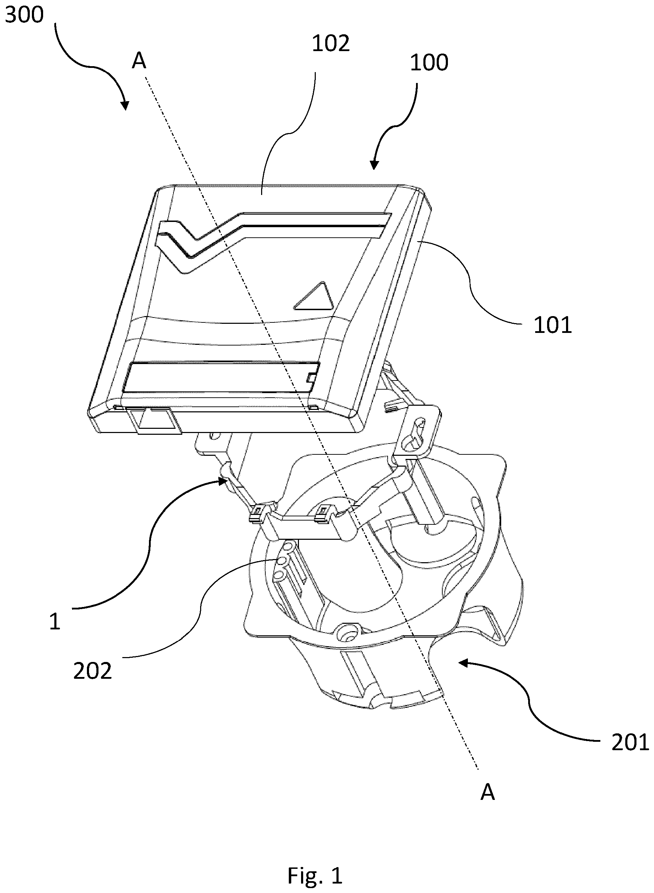

Figure 1 shows an optical termination assembly 300 comprising an optical termination box 100, a wall mounting element and a support device 1 configured to attach the optical termination box 100 to the wall mounting element.

The optical termination box 100 comprises a base 101 having connecting portions adjacent to the support device 1 when the optical termination box 100 is attached to the support device 1, and a cover 102 removably attached to the base 101.

According to the embodiment shown in figure 1, the wall mounting element comprises a wallbox 201 mounted in a wall and having mounting members 202 for removably attaching the support device 1 to the wallbox 201.

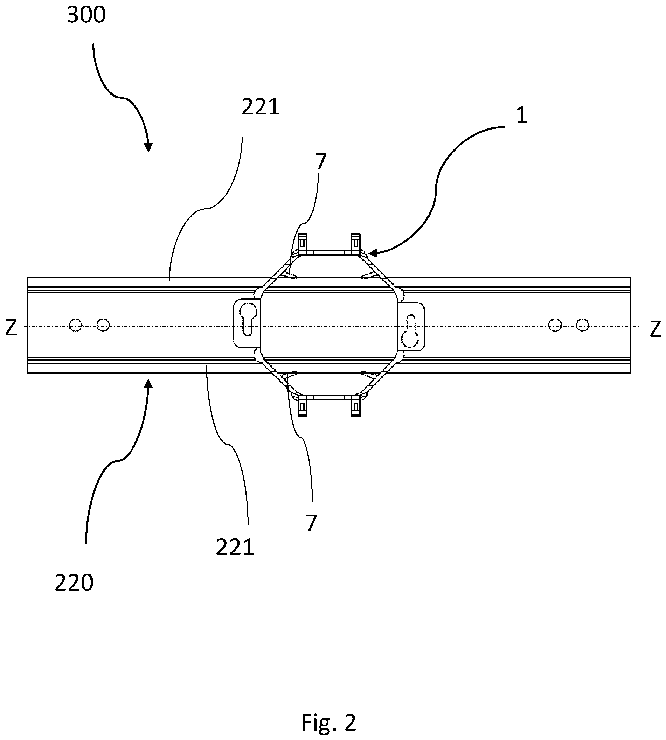

Figure 2 shows a wall mounting element and a support device 1 configured to attach an optical termination box, such as the optical termination box 100 of figure 1, to the wall mounting element. According to the embodiment shown in figure 2, the wall mounting element comprises a rail 220 extending along a longitudinal axis Z-Z and having attaching portions 221 for removably attaching the support device 1 to the rail 220.

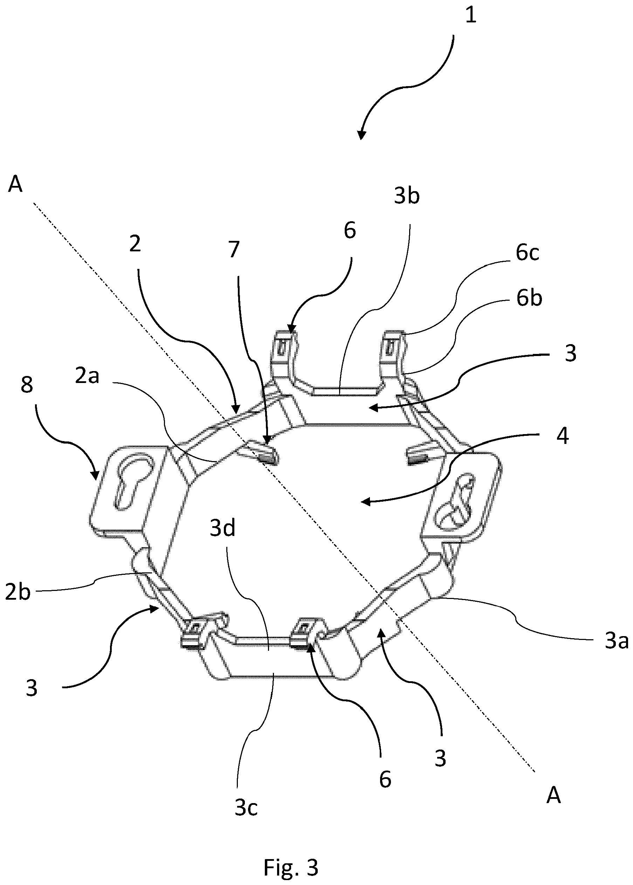

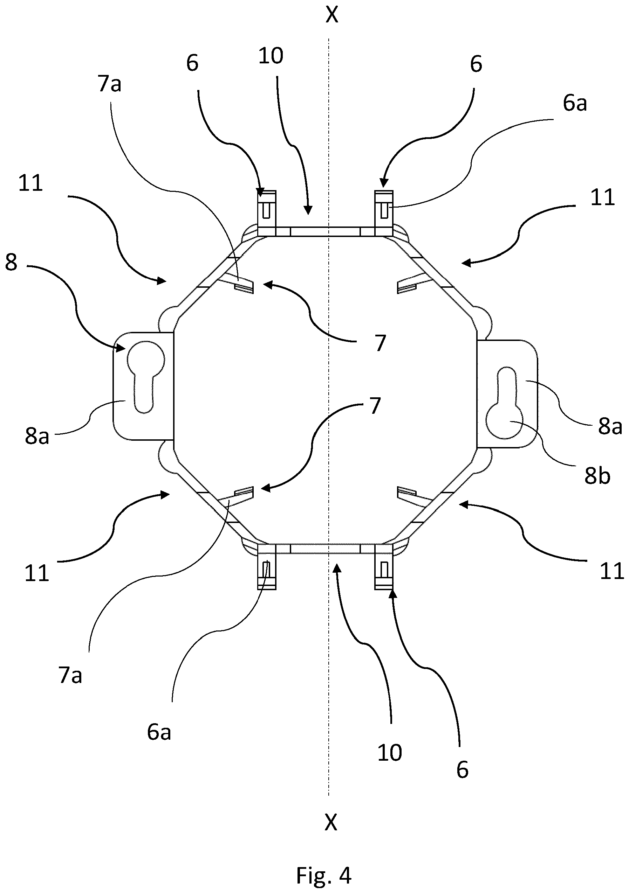

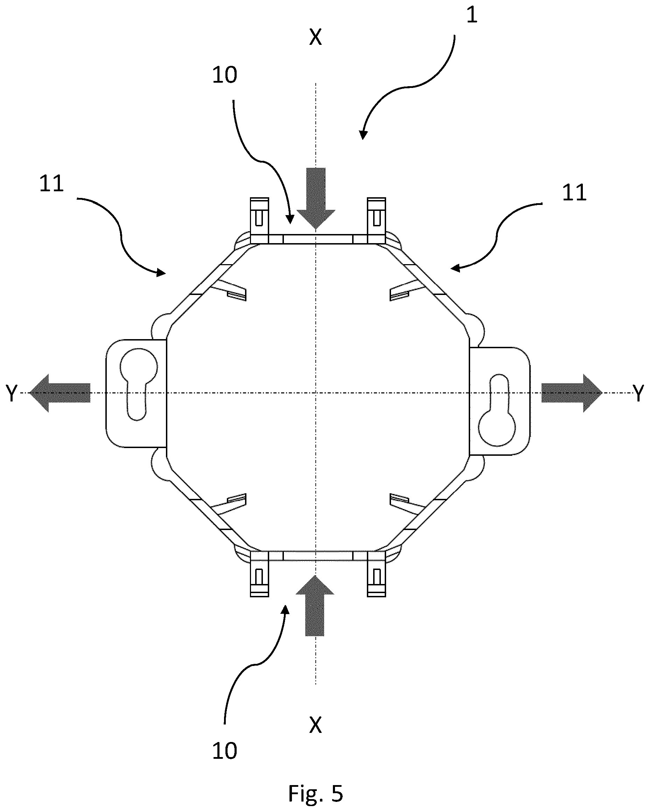

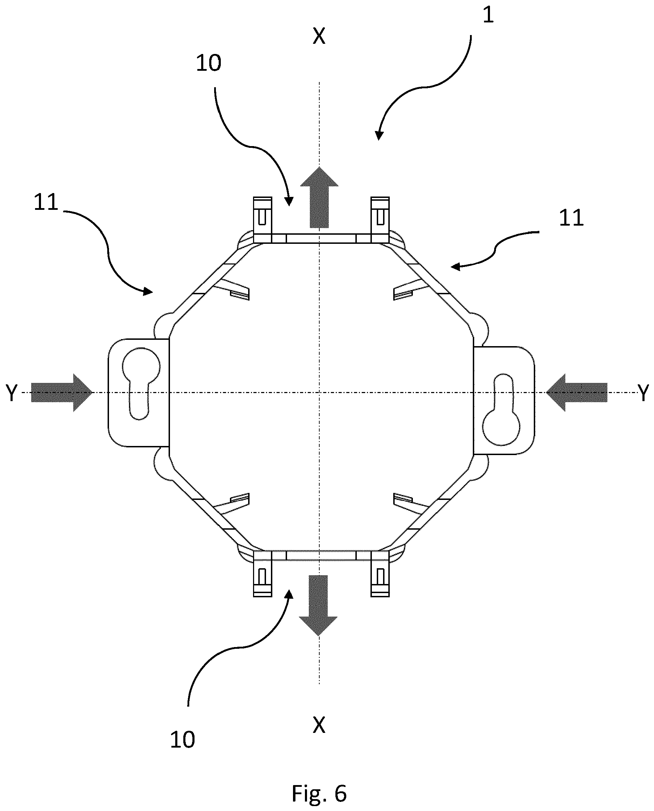

As shown in Figures 3-6, the support device 1 comprises a frame 2 and attachment members 6, 7, 8 projecting from the frame 2 to attach the frame 2 to the optical termination box 100 and to the wall mounting element.

The attachment members comprise first attachment members 6 configured to attach the frame 2 to the optical termination box 100.

According to one embodiment, the attachment members comprise second attachment members 7 configured to attach the frame 2 to the rail 220.

According to an alternative embodiment, the attachment members comprise third attachment members 8 configure to attach the frame 2 to the wallbox 201.

According to a preferred embodiment, the attachment members comprise the second attachment members 7 and the third attachment members 8 so that the frame 2 can be attached to different types of wall mounting elements respectively through the second attachment members 7 or the third attachment members 8. With this arrangement, the support device 1 increases the mounting flexibility for the operator.

The frame 2 has a plurality of walls 3 and the attachment members project from the walls 3. The walls 3 define an opening 4 and surround the opening 4.

Preferably, the frame 2 has a lower portion 2a configured to be arranged adjacent to the rail 220, when the frame 2 is attached to the rail 220. Moreover, the frame 2 has an upper portion 2b configured to be arranged adj acent to the optical termination box 100, when the frame 2 is attached to the optical termination box 100.

The lower portion 2a and the upper portion 2b define respectively a lower port 3a and an upper port 3b and the opening 4 extends between the lower port 3a and the upper port 3b along a longitudinal direction A-A. Preferably, lower portions 3c of the walls 3 and upper portions 3d of the walls 3 define respectively the lower port 3a and the upper port 3b. More preferably, the walls 3 extends along the longitudinal direction A-A between the respective lower portions 3c and upper portions 3d.

According to one embodiment, the first attachment members 6 are formed on the upper portion 2b of the frame 2 and the second attachment members 7 are formed on the lower portion 2a of the frame 2. The second attachment members 7 formed on the lower portion 2a of the frame 2 are configured to attach the frame 2 to the rail 220 of figure 2.

Preferably, the frame 2 has opposite first portions 10 spaced apart along a first direction X-X passing through the frame 2. Moreover, the frame 2 has second portions 11 spaced apart along a second direction Y-Y passing through the frame 2 and transversal to the first direction X-X. Namely, first portions 10 are alternated to second portions 11 along the frame 2.

Preferably, the first attachment members 6 comprise first protrusions 6a formed on opposite first portions 10 of the frame 2 and the second attachment members 7 comprise second protrusions 7a formed on opposite second portions 11 of the frame 2.

Preferably, each first protrusion 6a projects from the walls 3 and comprises a first part 6b projecting away from the opening 4 along a first direction parallel to the longitudinal direction A-A and a second part 6c, joined to the first part 6b, projecting outwardly along a second direction perpendicular to the first direction. More preferably, each first protrusion 6a is L-shaped and extends between a first end portion attached to the wall 3 and a second free end portion. The second free end portions are removably attachable to the connecting portions of the optical termination box 100.

Preferably, each second protrusion 7a projects from the walls 3 towards the opening 4. Each second protrusion 7a has a tooth configured to engage with the attaching portions 221 of the rail 220.

In one embodiment, the third attachment members 8 are formed on the frame 2 to attach the frame 2 to the wallbox 201 through fastening members, for example screws (not shown in the figures). Preferably, the third attachment members 8 comprise wings 8a which protrude from the walls 3 towards the opening 4, more preferably along a direction perpendicular to the longitudinal direction A-A and are provided with openings 8b for passage of fastening members.

Preferably, the second attachment members 7 are formed on the lower portion 2a and the third attachment members 8 are formed on the upper portion 2b.

According to one embodiment, the first attachment members 6 and the third attachment members 8 project from the upper portion 2b of the frame in order to install the optical termination box 100 flush with the wall when the frame is inserted in the wallbox 201.

At least one wall 3 has a resiliently deformable portion which allows the deformation the frame 2 for facilitating the attachment of the optical termination box 100 and the wall mounting element to the support device 1. At least one wall 3 is resiliently deformable. Preferably, resilient deformability of the deformable portions and the deformable walls 3 is obtained by choosing a resilient material for the walls 3 or controlling the thickness of the walls 3 during the moulding process.

According to the invention shown in the figures 3-6, the frame 2 is resiliently deformable upon application of forces on the wall 3. Preferably, the walls 3 are mutually connected. More preferably, each wall 3 of the frame 2 is resilient deformable. Even more preferably, the frame 2 comprises at least four walls and even more preferably eight walls.

The first attachment members 6 are configured to engage at least a portion of the optical termination box 100 and to attach the frame 2 to the optical termination box 100. The second attachment members 7 and the third attachment members 8 are configured to engage at least a portion of the wall mounting element and to attach the frame 2 to the wall mounting element.

The first attachment members 6 are configured to mutually move upon resilient deformation of the deformable portions of the walls 3. The second attachment members 7 are also configured to mutually move upon resilient deformation of the resiliently deformable portions of the walls 3.

According to one embodiment, the frame 2 is configured to reversibly switch between an undeformed configuration and a deformed configuration. Specifically, the frame 2 is configured to switch from the undeformed configuration to the deformed configuration upon application of forces on the walls 3 of the frame 2 and to switch back from the deformed configuration to the undeformed configuration upon release of the forces.

The first attachment members 6 and the second attachment members 7 are movable in antagonist way upon application of forces on the walls 3.

In particular, application of compression forces on the walls 3 along the first direction X-X causes deformation of the frame 2 and mutual moving apart of the second portions 11 along the second direction Y-Y and mutual approaching of the first portions 10 along the first direction X-X. Application of a compression forces on the walls 3 along the second direction Y-Y causes deformation of the frame 2 and mutual moving apart of the first portions 10 along the first direction X-X and mutual approaching of the second portions 11 along the second direction Y-Y. Moreover, the application of extension forces on the wall 3 along the first direction X-X causes deformation of the frame 2 and mutual moving apart of the first portion 10 along the first direction X-X and the mutual approaching of the second portion 11 along the second direction Y-Y.

In detail, the mutual moving apart of the first opposite portion 10 along the first direction X-X causes the mutual approach of the second attachment members 7 along the first direction X-X and the mutual moving apart of the second attachment members 7 along the first direction X-X.

With reference to figure 1, the support device 1 is attached to the wallbox 201 having a cavity with a specific shape for example a rectangular shape or octagonal shape. Specifically, the frame 2 is at least partially inserted in the cavity of the wallbox 201. According to one embodiment, the operator firstly attaches the third attachment members 8 to the mounting members 202 of the wallbox 201 through the fastening members, for example screws (not shown in the figures). Due to the fastening of the third attachment member 8, deformation of the walls 3 of the frame 2 is limited by the shape of the wallbox 201.

After attachment of the support device 1 to the wallbox 201, the walls 3 can be deformed in order to attach the optical termination box 100 to the wallbox 201. Specifically, the frame 2 is configured to engage at least one connecting portion of the optical termination box 100, and then the walls 3 can be deformed in order to engage the remaining connecting portions of the optical termination box 100.

Preferably, the first attachment members 6 formed on one of the first portions 10 are configured to engage corresponding connecting portions of the optical termination box 100. Then, upon application of a force on the termination box 100 along the first direction X-X, the first attachment members 6 engaged with the optical termination box 100 approach the first attachment members 6 formed on the opposite first portions 10. Mutual approaching of the first attachment members 6 allows to engage the first attaching members 6 formed on the opposite first portions 10 with corresponding connecting portions of the optical termination box 100. After the engagement of the connecting portions of the optical termination box 100 with the first attachment members 6 on both first opposite portions 10, the applied force is released and the frame 2 switches back from the deformed configuration to the undeformed configuration. Specifically, upon release the forces, the optical termination box 100 becomes attached to the frame 2 through the first attachment members 6.

With reference to figure 2, the support device 1 is mounted on the rail 220, preferably a DIN rail.

According to a first embodiment, the operator can deform the frame 2 applying compression forces on the opposite second portions 11 along the second direction Y-Y. With this compression, the frame 2 switches from the undeformed configuration to the deformed configuration in which the second attachment members 7 are mutually approached along the second direction Y-Y and mutually moved apart along the first direction X-X. Specifically, the deformed configuration of the frame 2 allows the engagement of all second attachment members 7 with the respective connecting portions 221 of the rail 220. More in detail, the frame 2 in the deformed configuration is arranged on the rail 220 with the second attachment members 7 at the respective connecting portions 221. Then, upon positioning the frame 2 on the rail 220 and following releasing of forces, the frame 2 switches back from the deformed configuration to the undeformed configuration attaching the second attachment members 7 to connecting portions 221 of the rail 220 thereby attaching the frame 2 to the rail 220.

According to a second embodiment, the operator can engage the second attachment members 7 formed on two opposite second portions 11 with a connecting portion 221 of the rail 220. Then upon application of forces along the first direction X-X, the frame 2 switches from the undeformed configuration to the deformed configuration in which the second attachment members 7 are approached along the second direction Y-Y and moved apart along the first direction X-X. Consequently, the deformed configuration allows the second attachment members 7 formed on the opposite second portions 11 to respectively engage with the opposite connecting portions 221 of the rail 220. When the second attachment members 7 are engaged with the respective connecting portion 221 of the rail 220, the applied force is released and the frame 2 switches back from the deformed to the undeformed configuration attaching the support device 1 to the rail 220.

After the attachment of the support device 1 to the rail 220, the frame 2 is further deformed in order to attach the optical termination box 100 to the support device 1.

According to a first embodiment, the optical termination box 100 can be attached to the frame 2 as disclosed with reference to the attachment of the optical termination box 100 to the wallbox 201.

According to a second embodiment, the frame 2 attached to rail 220 is free to be deformed both along the first direction X-X and along the second direction Y-Y. The frame 2 can be switched from the undeformed configuration to the deformed configuration, upon application of forces, allowing the engagement of the connecting portions of optical termination box 100 with the first attachment members 6. Then upon release of forces, the frame 2 switches back from the deformed configuration to the undeformed configuration attaching the optical termination box 100 to the frame 2.

## Claims

1. A support device (1) for attaching an optical termination box (100) to a wall mounting element (201, 220), the support device comprising:
- a frame (2) having one or more walls (3), the walls (3) defining an opening (4) and surrounding the opening (4);
- attachment members projecting from the frame (2) and comprising first attachment members (6) configured to attach the frame (2) to the optical termination box (100) and second attachment members (7) configured to attach the frame (2) to the wall mounting element (201, 220),
**characterised in that**:
- at least one wall (3) has a resiliently deformable portion; and
- the first attachment members (6) are configured to mutually move upon resilient deformation of the resiliently deformable portion;
- the second attachment members (7) are configured to mutually move upon resilient deformation of the resiliently deformable portion;
- the first attachment members (6) and the second attachment members (7) move in antagonist way upon application of forces on the walls (3)

2. The support device (1) according to claim 1, wherein:
- the frame (2) has a lower portion (2a) configured to be arranged adjacent to the wall mounting element (220), when the frame (2) is attached to the wall mounting element (220);
- the frame (2) has an upper portion (2b) configured to be arranged adjacent to the optical termination box (100), when the frame (2) is attached to the optical termination box (100).

3. The support device (1) according to claim 2, wherein:
- the first attachment members (6) are formed on the upper portion (2b) of the frame (2);
- the second attachment members (7) are formed on the lower portion (2a) of the frame (2).

4. The support device (1) according to anyone of claims 1 to 3, wherein:
- the at least one wall (3) is resiliently deformable.

5. The support device (1) according to claim 4, wherein:
- the frame (2) has a plurality of resiliently deformable walls (3) defining the opening (4).

6. The support device (1) according to anyone of the claims 1 to 5, wherein:
- the first attachment members (6) comprise first protrusions (6a) formed on opposite first portions (10) of the frame (2), the first portions (10) being spaced apart along a first direction (X-X) passing through the frame (2),
- the second attachment members (7) comprise second protrusions (7a) formed on opposite second portions (11) of the frame (2), the second portions (11) being spaced apart along a second direction (Y-Y) passing through the frame (2) and transversal to the first direction (X-X).

7. The support device (1) according to anyone of claims 1 to 6, wherein:
- the frame (2) is configured to reversibly switch between an undeformed configuration and a deformed configuration,
- the frame (2) is configured to switch from the undeformed configuration to the deformed configuration upon application of forces on the walls (3) of the frame (2),
- the frame (2) is configured to switch back from the deformed configuration to the undeformed configuration upon release of the forces.

8. The support device (1) according of claim 7, wherein:
- the first attachment members (6) are configured to:
- engage a portion of the optical termination box (100) when the frame (2) is in undeformed configuration,
- engage a remaining portion of the optical termination box (100) when the frame (2) switches from the undeformed configuration to the deformed configuration, and
- attach the frame (2) to the optical termination box (100) when the first attachment members (6) engage respective portions of the optical termination box (100) and the frame (2) switches back from the deformed configuration to the undeformed configuration.

9. The support device (1) according to claim 7 or 8, wherein:
- the second attachment members (7) are configured to:
- engage attaching portions of the wall mounting element (220) when the frame (2) switches from the undeformed configuration to the deformed configuration, and
- attach the frame (2) to the wall mounting element (220) when the frame (2) switches back from the deformed configuration to the undeformed configuration.

10. The support device (1) according to claim 7 or 8, wherein:
- the second attachment members (7) are configured to:
- engage a portion of the wall mounting element (220) when the frame (2) is in undeformed configuration,
- engage a remaining portion of the wall mounting element (220) when the frame (2) switches from the undeformed configuration to the deformed configuration, and
- attach the frame (2) to the wall mounting element (220) when the second attachment members (7) engage respective portions of the wall mounting element (220) and the frame (2) switches back from the deformed configuration to the undeformed configuration.

11. An optical termination assembly (300) comprising:
- an optical termination box (100),
- a wall mounting element (201, 220), and
- a support device (1) according to anyone of claims 1-10 attached to the optical termination box (100) and the wall mounting element (201, 220).

12. The optical termination assembly (300) according to claim 11, wherein:
- the wall mounting element (201) comprises a wallbox (201) embedded in a wall, the wallbox (201) having mounting members (202),
- the support device (1) comprises third attachment members (8) formed on the frame (2) to attach the frame (2) to the wallbox (201) through fastening members attaching the third attachment members (8) to the mounting members (202) of the wallbox (201).

13. The optical termination assembly (300) according to claim 11, wherein:
- the wall mounting element (220) comprises a rail (220) extending along a longitudinal axis (Z-Z), the rail (220) having attaching portions (221) coupled with the second attachment members (7) for removably attaching the frame (2) to the rail (220).

## Patentansprüche

1. Haltevorrichtung (1) zum Befestigen einer optischen Anschlussdose (100) an einem Wandbefestigungselement (201, 220), wobei die Haltevorrichtung Folgendes umfasst:
- einen Rahmen (2) mit einer oder mehreren Wänden (3), wobei die Wände (3) eine Öffnung (4) definieren und die Öffnung (4) umgeben;
- Befestigungselemente, die von dem Rahmen (2) vorstehen und erste Befestigungselemente (6) umfassen, die so konfiguriert sind, dass sie den Rahmen (2) an der optischen Anschlussdose (100) befestigen, und zweite Befestigungselemente (7), die so konfiguriert sind, dass sie den Rahmen (2) an dem Wandmontageelement (201, 220) befestigen,
**dadurch gekennzeichnet, dass**:
- mindestens eine Wand (3) einen elastisch verformbaren Abschnitt aufweist; und
- die ersten Befestigungselemente (6) so konfiguriert sind, dass sie sich bei elastischer Verformung des elastisch verformbaren Abschnitts gegenseitig bewegen;
- die zweiten Befestigungselemente (7) so konfiguriert sind, dass sie sich bei einer elastischen Verformung des elastisch verformbaren Abschnitts gegenseitig bewegen;
- die ersten Befestigungselemente (6) und die zweiten Befestigungselemente (7) bewegen sich bei Aufbringung von Kräften auf die Wände (3) in entgegengesetzter Weise.

2. Haltevorrichtung (1) nach Anspruch 1, wobei:
- der Rahmen (2) einen unteren Abschnitt (2a) aufweist, der so konfiguriert ist, dass er angrenzend an das Wandbefestigungselement (220) angeordnet wird, wenn der Rahmen (2) an dem Wandbefestigungselement (220) befestigt ist;
- der Rahmen (2) einen oberen Abschnitt (2b) aufweist, der so konfiguriert ist, dass er angrenzend an die optische Anschlussdose (100) angeordnet ist, wenn der Rahmen (2) an der optischen Anschlussdose (100) befestigt ist.

3. Haltevorrichtung (1) nach Anspruch 2, wobei:
- die ersten Befestigungselemente (6) an dem oberen Abschnitt (2b) des Rahmens (2) ausgebildet sind;
- die zweiten Befestigungselemente (7) an dem unteren Abschnitt (2a) des Rahmens (2) ausgebildet sind.

4. Haltevorrichtung (1) nach einem der Ansprüche 1 bis 3, wobei:
- die mindestens eine Wand (3) elastisch verformbar ist.

5. Haltevorrichtung (1) nach Anspruch 4, wobei:
- der Rahmen (2) eine Mehrzahl von elastisch verformbaren Wänden (3) aufweist, die die Öffnung (4) begrenzen.

6. Haltevorrichtung (1) nach einem der Ansprüche 1 bis 5, wobei:
- die ersten Befestigungselemente (6) erste Vorsprünge (6a) umfassen, die an gegenüberliegenden ersten Abschnitten (10) des Rahmens (2) ausgebildet sind, wobei die ersten Abschnitte (10) entlang einer ersten Richtung (X-X), die durch den Rahmen (2) verläuft, voneinander beabstandet sind,
- die zweiten Befestigungselemente (7) zweite Vorsprünge (7a) umfassen, die an gegenüberliegenden zweiten Abschnitten (11) des Rahmens (2) ausgebildet sind, wobei die zweiten Abschnitte (11) entlang einer zweiten Richtung (Y-Y), die durch den Rahmen (2) und quer zur ersten Richtung (X-X) verläuft, voneinander beabstandet sind.

7. Haltevorrichtung (1) nach einem der Ansprüche 1 bis 6, wobei:
- der Rahmen (2) so konfiguriert ist, dass er reversibel zwischen einer unverformten Konfiguration und einer verformten Konfiguration wechselt,
- der Rahmen (2) so konfiguriert ist, dass er beim Aufbringen von Kräften auf die Wände (3) des Rahmens (2) von der undeformierten Konfiguration in die deformierte Konfiguration umschaltet,
- der Rahmen (2) so konfiguriert ist, dass er bei Aufhebung der Kräfte von der verformten Konfiguration in die unverformte Konfiguration zurückschaltet.

8. Haltevorrichtung (1) nach Anspruch 7, wobei:
- die ersten Befestigungselemente (6) konfiguriert sind, um:
- mit einem Teil der optischen Anschlussdose (100) in Eingriff zu kommen, wenn sich der Rahmen (2) in undeformierter Konfiguration befindet,
- mit einem verbleibenden Abschnitt der optischen Anschlussdose (100) in Eingriff zu kommen, wenn der Rahmen (2) von der undeformierten Konfiguration in die deformierte Konfiguration wechselt, und
- Befestigen des Rahmens (2) an der optischen Anschlussdose (100), wenn die ersten Befestigungselemente (6) mit den jeweiligen Abschnitten der optischen Anschlussdose (100) in Eingriff kommen und der Rahmen (2) von der verformten Konfiguration in die unverformte Konfiguration zurückschaltet.

9. Haltevorrichtung (1) nach Anspruch 7 oder 8, wobei:
- die zweiten Befestigungselemente (7) ausgebildet sind, um:
- in Befestigungsabschnitte des Wandbefestigungselements (220) einzugreifen, wenn der Rahmen (2) von der undeformierten Konfiguration in die deformierte Konfiguration wechselt, und
- den Rahmen (2) an dem Wandbefestigungselement (220) zu befestigen, wenn der Rahmen (2) von der verformten Konfiguration in die unverformte Konfiguration zurückschaltet.

10. Haltevorrichtung (1) nach Anspruch 7 oder 8, wobei:
- die zweiten Befestigungselemente (7) konfiguriert sind, um:
- in einen Teil des Wandbefestigungselements (220) einzugreifen, wenn sich der Rahmen (2) in unverformter Konfiguration befindet,
- in einen verbleibenden Abschnitt des Wandbefestigungselements (220) einzugreifen, wenn der Rahmen (2) von der undeformierten Konfiguration in die deformierte Konfiguration wechselt, und
- Befestigen des Rahmens (2) an dem Wandbefestigungselement (220), wenn die zweiten Befestigungselemente (7) in entsprechende Abschnitte des Wandbefestigungselements (220) eingreifen und der Rahmen (2) von der verformten Konfiguration in die unverformte Konfiguration zurückschaltet.

11. Optische Abschlussanordnung (300), die Folgendes umfasst:
- eine optische Anschlussdose (100),
- ein Wandbefestigungselement (201, 220), und
- eine Haltevorrichtung (1) nach einem der Ansprüche 1 bis 10, die an der optischen Anschlussdose (100) und dem Wandbefestigungselement (201, 220) angebracht ist.

12. Optische Abschlussanordnung (300) nach Anspruch 11, wobei:
- das Wandbefestigungselement (201) einen in eine Wand eingebetteten Wandkasten (201) umfasst, wobei der Wandkasten (201) Befestigungselemente (202) aufweist,
- die Haltevorrichtung (1) dritte Befestigungselemente (8) umfasst, die an dem Rahmen (2) ausgebildet sind, um den Rahmen (2) an dem Wandkasten (201) durch Befestigungselemente zu befestigen, die die dritten Befestigungselemente (8) an den Befestigungselementen (202) des Wandkastens (201) befestigen.

13. Optische Abschlussanordnung (300) nach Anspruch 11, wobei:
- das Wandbefestigungselement (220) eine Schiene (220) umfasst, die sich entlang einer Längsachse (Z-Z) erstreckt, wobei die Schiene (220) Befestigungsabschnitte (221) aufweist, die mit den zweiten Befestigungselementen (7) gekoppelt sind, um den Rahmen (2) lösbar an der Schiene (220) zu befestigen.

## Revendications

1. Dispositif de support (1) pour fixer un boîtier de terminaison optique (100) à un élément de montage mural (201, 220), le dispositif de support comprenant :
- un cadre (2) ayant une ou plusieurs parois (3), les parois (3) définissant une ouverture (4) et entourant l'ouverture (4) ;
- des organes de fixation dépassant du cadre (2) et comprenant des premiers organes de fixation (6) configurés pour fixer le cadre (2) au boîtier de terminaison optique (100) et des deuxièmes organes de fixation (7) configurés pour fixer le cadre (2) à l'élément de montage mural (201, 220),
**caractérisé en ce que** :
- au moins une paroi (3) a une partie déformable élastiquement ; et
- les premiers organes de fixation (6) sont configurés pour se déplacer mutuellement lors de la déformation élastique de la partie déformable élastiquement ;
- les deuxièmes organes de fixation (7) sont configurés pour se déplacer mutuellement lors de la déformation élastique de la partie déformable élastiquement ;
- les premiers organes de fixation (6) et les deuxièmes organes de fixation (7) se déplacent de manière antagoniste lors de l'application de forces sur les parois (3).

2. Dispositif de support (1) selon la revendication 1, dans lequel :
- le cadre (2) a une partie inférieure (2a) configurée pour être agencée adjacente à l'élément de montage mural (220), lorsque le cadre (2) est fixé à l'élément de montage mural (220) ;
- le cadre (2) a une partie supérieure (2b) configurée pour être agencée adjacente au boîtier de terminaison optique (100), lorsque le cadre (2) est fixé au boîtier de terminaison optique (100).

3. Dispositif de support (1) selon la revendication 2, dans lequel :
- les premiers organes de fixation (6) sont formés sur la partie supérieure (2b) du cadre (2) ;
- les deuxièmes organes de fixation (7) sont formés sur la partie inférieure (2a) du cadre (2).

4. Dispositif de support (1) selon l'une quelconque des revendications 1 à 3, dans lequel :
- l'au moins une paroi (3) est déformable élastiquement.

5. Dispositif de support (1) selon la revendication 4, dans lequel :
- le cadre (2) a une pluralité de parois (3) déformables élastiquement définissant l'ouverture (4).

6. Dispositif de support (1) selon l'une quelconque des revendications 1 à 5, dans lequel :
- les premiers organes de fixation (6) comprennent des premières saillies (6a) formées sur des premières parties (10) opposées du cadre (2), les premières parties (10) étant espacées le long d'une première direction (X-X) passant à travers le cadre (2),
- les deuxièmes organes de fixation (7) comprennent des deuxièmes saillies (7a) formées sur des deuxièmes parties (11) opposées du cadre (2), les deuxièmes parties (11) étant espacées le long d'une deuxième direction (Y-Y) passant à travers le cadre (2) et transversale par rapport à la première direction (X-X).

7. Dispositif de support (1) selon l'une quelconque des revendications 1 à 6, dans lequel :
- le cadre (2) est configuré pour alterner de manière réversible entre une configuration non déformée et une configuration déformée,
- le cadre (2) est configuré pour passer de la configuration non déformée à la configuration déformée lors de l'application de forces sur les parois (3) du cadre (2),
- le cadre (2) est configuré pour repasser de la configuration déformée à la configuration non déformée lors de la libération des forces.

8. Dispositif de support (1) selon la revendication 7, dans lequel :
- les premiers organes de fixation (6) sont configurés pour :
- venir en prise avec une partie du boîtier de terminaison optique (100) lorsque le cadre (2) est dans la configuration non déformée,
- venir en prise avec une partie restante du boîtier de terminaison optique (100) lorsque le cadre (2) passe de la configuration non déformée à la configuration déformée, et
- fixer le cadre (2) au boîtier de terminaison optique (100) lorsque les premiers organes de fixation (6) viennent en prise avec des parties respectives du boîtier de terminaison optique (100) et le cadre (2) repasse de la configuration déformée à la configuration non déformée.

9. Dispositif de support (1) selon la revendication 7 ou 8, dans lequel :
- les deuxièmes organes de fixation (7) sont configurés pour :
- venir en prise avec des parties de fixation de l'élément de montage mural (220) lorsque le cadre (2) passe de la configuration non déformée à la configuration déformée, et
- fixer le cadre (2) à l'élément de montage mural (220) lorsque le cadre (2) repasse de la configuration déformée à la configuration non déformée.

10. Dispositif de support (1) selon la revendication 7 ou 8, dans lequel :
- les deuxièmes organes de fixation (7) sont configurés pour :
- venir en prise avec une partie de l'élément de montage mural (220) lorsque le cadre (2) est dans la configuration non déformée,
- venir en prise avec une partie restante de l'élément de montage mural (220) lorsque le cadre (2) passe de la configuration non déformée à la configuration déformée, et
- fixer le cadre (2) à l'élément de montage mural (220) lorsque les deuxièmes organes de fixation (7) viennent en prise avec des parties respectives de l'élément de montage mural (220) et le cadre (2) repasse de la configuration déformée à la configuration non déformée.

11. Ensemble de terminaison optique (300) comprenant :
- un boîtier de terminaison optique (100),
- un élément de montage mural (201, 220), et
- un dispositif de support (1) selon l'une quelconque des revendications 1 à 10 fixé au boîtier de terminaison optique (100) et à l'élément de montage mural (201, 220).

12. Ensemble de terminaison optique (300) selon la revendication 11, dans lequel :
- l'élément de montage mural (201) comprend un boîtier mural (201) intégré dans une paroi, le boîtier mural (201) ayant des organes de montage (202),
- le dispositif de support (1) comprend des troisièmes organes de fixation (8) formés sur le cadre (2) pour fixer le cadre (2) au boîtier mural (201) par l'intermédiaire d'organes de fixation fixant les troisièmes organes de fixation (8) aux organes de montage (202) du boîtier mural (201).

13. Ensemble de terminaison optique (300) selon la revendication 11, dans lequel :
- l'élément de montage mural (220) comprend un rail (220) s'étendant le long d'un axe longitudinal (Z-Z), le rail (220) ayant des parties de fixation (221) accouplées aux deuxièmes organes de fixation (7) pour fixer de manière amovible le cadre (2) au rail (220).
